# EUROPÄISCHE PATENTSCHRIFT

(11) **EP 3 006 793 B1**
(45) Veröffentlichungstag und Bekanntmachung des Hinweises auf die Patenterteilung: **15.03.2017**
(21) Anmeldenummer: 14188383.5
(22) Anmeldetag: 10.10.2014
(51) Int. Cl.: F16K 11/07, F16K 31/06

(54) **Schieberventil mit Verdrehsicherung**
Gate valve with anti-twist device
Soupape à coulisse équipée d'une sécurité anti-rotation

(43) Veröffentlichungstag der Anmeldung: 13.04.2016
(73) Patentinhaber: HAWE Hydraulik SE, 81673 München (DE)
(72) Erfinder: Imlauer, Markus, 81673 München (DE); Burmeister, Daniel, 80639 München (DE)
(74) Vertreter: Grosse Schumacher Knauer von Hirschhausen

(56) Entgegenhaltungen:
- DE-B3-102008 059 434
- FR-A5- 2 113 166
- GB-A- 558 363
- US-A- 3 756 282

## Beschreibung

Die vorliegende Erfindung betrifft ein Schieberventil mit Verdrehsicherung und insbesondere ein Schieberventil mit Verdrehsicherung für hydraulische Anwendungen.

Bekannte hydraulische Wegeventile sind häufig in Form eines Kolbenschieberventils mit einem in eine Gehäusebohrung aufgenommenen und darin längs verschiebbar Steuerkolben ausgebildet. Hierbei sind mittels einer umlaufenden Ausnehmung um einen Kolbenkern an Kolbenbunden Steuerflächen gebildet, mittels denen ein das Ventilgehäuse durchfließender Flüssigkeitsstrom geregelt wird. Dabei werden durch die Kolbenbunde und die zwischen den Kolbenbunden bestehenden Ausnehmungen bei entsprechender Längsverschiebung des Steuerkolbens gehäuseseitig ausgebildete Gehäuseanschlüsse freigegeben bzw. gesperrt. Ein bekanntes Beispiel für ein entsprechendes hydraulisches Wegeventil ist aus der Druckschrift DE 10 2008 059434 B3 bekannt.

Zur Vermeidung einer Eigenrotation des Steuerkolbens im Gehäuse, und insbesondere einem Verdrehen des Steuerkolbens, wird im Allgemeinen im Kolbenschieberventil eine Verdrehsicherung vorgesehen, um ein zuverlässiges Freimachen bzw. Sperren von gehäuseseitigen Anschlüssen bei Aufrechterhaltung einer maximalen Durchflussmenge aufrechtzuerhalten.

Verdrehsicherungen sind in verschiedenen Weisen schon bekannt. Im Rahmen der Druckschrift DE 10 2008 059434 B3 weist der Steuerkolben ein in seiner Mantelfläche gebildetes Langloch auf, das sich in der Längsrichtung des Steuerkolbens und insbesondere parallel zur Verschieberichtung des Steuerkolbens erstreckt. Eine Verdrehsicherung wird gebildet, indem ein gehäuseseitig in das Langloch eingreifender, d.h. bezüglich des Steuerkolbens vom Gehäuse radial nach innen vorstehender Vorsprung, derart in das Langloch eingreift, dass der Steuerkolben relativ zu dem Vorsprung verschiebbar ist, jedoch nicht gegenüber dem Gehäuse verdreht werden kann.

Aus der Druckschrift DE 10 2009 041859 A1 ist ein Steuerschieber für ein Hydraulikventil bekannt, der eine sich axial erstreckende Nut aufweist, die beim Einbau des Steuerschiebers in ein Ventilgehäuse als eine Positionier-/Verdrehsicherung dient und eine axial Bewegung des Steuerschiebers im Gehäuse gewährleistet.

Diese bekannten Verdrehsicherungen gehen jedoch mit großen Reibungsverlusten einher, die die Schalteigenschaften des Ventils nachteilig beeinflussen. Diese Situation ist insbesondere bei direkt gesteuerten Wegeventilen unbefriedigend, da hier bei einer Ansteuerung von z.B. 34 N auch schon sehr kleine Reibkräfte ins Gewicht fallen und die Effizienz dieser Ventile stark einschränken. Eine Möglichkeit zur Verringerung von Reibung bei bekannten Verdrehsicherungen wäre ein größeres Spiel in der Verdrehsicherung zuzulassen, wobei hierbei jedoch die Toleranz der Verdrehsicherung gegenüber Verdrehungen vergrößert wird.

Ausgehend von diesen bekannten Lösungen ist es daher eine Aufgabe ein Schieberventil mit sehr geringer Toleranz bezüglich Verdrehung des Schieberkolbens bei gleichzeitig sehr geringen Reibverlusten bereitzustellen.

Die vorangehenden Probleme des Stands der Technik und die vorangehende Aufgabe wird im Rahmen der Erfindung durch ein Schieberventil mit Verdrehsicherung gelöst, wobei das Schieberventil ein Ventilgehäuse und einen Schieberkolben umfasst, der im Ventilgehäuse axial verschiebbar angeordnet ist und einen zylindrischen Bereich mit einer Mantelfläche aufweist, in der eine axial zumindest über den Schieberkolbenhub verlaufende Längsnut gebildet ist, in die ein im Ventilgehäuse angeordnetes Verdrehsicherungselement eingreift. Erfindungsgemäß wird das Verdrehsicherungselement dabei durch eine zumindest mit Kanten der Längsnut zusammenwirkende Kugel dargestellt, die im Ventilgehäuse schwimmend angeordnet ist.

Der Einsatz einer Kugel als Verdrehsicherungselement im Zusammenwirken mit einer axial zumindest über den Schieberkolbenhub verlaufenden Längsnut, die in einer Mantelfläche eines Schieberkolbens gebildet ist, stellt eine einfache, platzsparende und reibungsarme Verdrehsicherung dar. Hierbei wird aufgrund der im Ventilgehäuse schwimmend angeordneten Kugel ein sehr reibarmes Verdrehsicherungselement bereitgestellt, wobei Eigenrotationen und Drehungen des Schiebers bei Aufrechterhaltung einer reibungsarmen Längsbewegung des Schiebers mittels einer Rollbewegung der Kugel umgesetzt wird.

In einer vorteilhaften Ausführungsform der vorliegenden Erfindung besteht zwischen der Kugel und mindestens einer Kante der Längsnut lediglich eine Punktberührung, was ein sehr reibarmes Zusammenwirken des Verdrehsicherungselements mit der Längsnut bedingt.

In einer weiteren vorteilhaften Ausführungsform der Erfindung ist in Ausrichtung zur Längsnut im Ventilgehäuse eine radiale Bohrung mit einem darin angeordneten Gewindestift vorgesehen, so dass ein radiales Spiel der Kugel aus der Längsnut heraus durch den Gewindestift begrenzt wird. Dies stellt eine sehr einfache Weise zur Einstellung einer gewünschten geringen Toleranz der Verdrehsicherung dar, wobei über das anhand des Gewindestifts auf einfache Weise einstellbare radiale Spiel der Kugel die gewünschte Toleranz der Verdrehsicherung in einem gewünschten Maß eingestellt und feinjustiert werden kann.

In einer weiteren vorteilhafteren Ausgestaltung hierin ist in der Bohrung ferner ein den Gewindestift konterndes Konterelement vorgesehen. Dadurch wird die Zuverlässigkeit der Verdrehsicherung erhöht, wobei eine Verschlechterung der Toleranz, bspw. eine Lockerung des Gewindestifts in der Bohrung durch Erschütterungen am Schieberventil, durch Kontern des Gewindestifts zuverlässig verhindert wird.

In einer weiteren vorteilhafteren Ausgestaltung hierin ist zwischen dem Gewindestift und dem Konterelement in der Bohrung eine weitere Kugel angeordnet. Hierdurch wird der Gewindestift durch das Konterelement gekontert, wobei über die weitere Kugel zwischen dem Gewindestift und dem Konterelement kein Drehmoment übertragen wird.

In einer weiteren vorteilhaften Ausführungsform der Erfindung sind in der Mantelfläche des Schieberkolbens ferner zwei Ausnehmungen gebildet, die einen Steg als Strömungsteiler für Hydraulikflüssigkeit in Ausrichtung zu einer im Ventilgehäuse vorgesehenen Druckeinlassmündung festlegen. In dieser Ausgestaltung des Schieberventils kann durch den Steg als Strömungsteiler in Ausrichtung zu einer Druckeinlassmündung im Ventil eine vorteilhafte Vorabzentrierung des Schieberkolbens im Gehäuse erfolgen, wodurch der Reibungsaufwandes der Verdrehsicherung weiter reduziert wird.

In einer vorteilhafteren Ausgestaltung hierin wird ferner dem Steg in der Mantelfläche diametral gegenüberliegend ein weiterer Steg durch zwei weitere Ausnehmungen festgelegt, wobei in den Ausnehmungen bezüglich der Stege spiegelsymmetrisch angeordnete Durchgangslöcher gebildet sind, sodass die gegenüberliegenden Ausnehmungen beider Kolbenhälften jeweils miteinander über die Durchgangslöcher in Verbindung stehen. Hierbei erfolgt mittels eines Stegs und den dazu spiegelsymmetrisch angeordneten Durchgangslöchern eine Aufteilung einer Zulaufmenge an Hydraulikflüssigkeit zum Schieberkolben, wodurch innerhalb des Schieberventils eine Stabilität des Schieberkolbens gegen Verdrehung und Eigenrotation begünstigt wird.

In einer weiteren vorteilhafteren Ausgestaltung hierin sind die Stege aufweisenden Kolbenhätften des Schieberkolbens durch im Ventilgehäuse gebildete Kanäle verbunden. Dadurch wird ein Druckabfall zwischen den Kolbenhälften des Schieberkolbens verringert und eine Stabilität und Zentrierung des Schieberkolbens weiter begünstigt und aufrechterhalten.

In einer weiteren vorteilhafteren Ausgestaltung hierin ist der Querschnitt eines Kanals größer als der Querschnitt der Durchgangslöcher. Dadurch wird sichergestellt, dass, je nach Schieberstellung, ein zwischen den Kolbenhälften auftretender Druckabfall gering genug ist, aber ein genügender Druckabgleich zwischen den Kolbenhälften ermöglicht wird.

In einer weiteren vorteilhaften Ausführungsform der Erfindung ist eine Tiefe und/oder Weite der Längsnut in der Mantelfläche des Schieberkolbens kleiner ist als der Durchmesser der Kugel. Hierdurch wird eine geringe Toleranz der Verdrehsicherung festgelegt.

In einer weiteren vorteilhaften Ausführungsform der Erfindung weist die Längsnut senkrecht zu ihrer axialen Erstreckungsrichtung einen rechteckigen Querschnitt auf. Dies ist eine auf einfache Weise gebildete Längsnut.

Anschauliche Ausführungsformen des Erfindungsgegenstands werden anhand der beiliegenden Figuren nachfolgend erläutert, wobei:
- Fig. 1: eine perspektivische Ansicht eines Schieberkolbens gemäß einer Ausführungsform der Erfindung zeigt,
- Fig. 2: eine Schnittansicht entlang einer Axialrichtung des Schieberkolbens in einem Schieberventil gemäß einiger anschaulicher Ausführungsformen der Erfindung zeigt,
- Fig. 3: einen Radialschnitt des Schieberventils mit Schieberkolben gemäß einiger anschaulicher Ausführungsformen der Erfindung zeigt,
- Fig. 4: einen Schnitt entlang einer Axialrichtung des Schieberventils mit Schieberkolben gemäß einiger anschaulicher Ausführungsformen der Erfindung zeigt,
- Fig. 5: Strömungsrichtungen zu der Darstellung in Fig. 3 darstellt, und
- Fig. 6: Strömungsrichtungen zu der Ansicht in Fig. 4 darstellt.

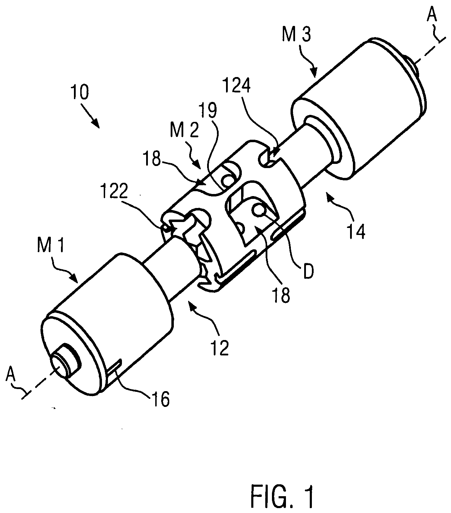

Fig. 1 stellt einen Schieberkolben 10 in einer perspektivischen Ansicht gemäß einiger anschaulicher Ausführungsformen der Erfindung dar, wobei um einer übersichtlichen Darstellung willen die restlichen Elemente eines Schieberventils, wie z.B. ein Ventilgehäuse usw., nicht dargestellt sind. Der Schieberkolben ist im Wesentlichen von einer zylindrischer Gestalt mit einer Mantelfläche, die durch Verengungen 12, 14 in zylindrische Kolbenbereiche M1, M2 und M3 unterteilt ist, die gegenüber den Einschnürungen 12 und 14 einen größeren Außendurchmesser und einen größeren Umfang aufweisen; die Verengungen 12 und 14 stellen im Vergleich zu den zylindrischen Kolbenbereichen M1, M2, M3 darstellungsgemäß zylindrische Kolbenteile mit kleinem Außendurchmesser und kleinem Umfang dar. Jeder der zylindrischen Kolbenbereiche M1, M2 und M3 weist eine Mantelfläche auf, wobei in der Mantelfläche des zylindrischen Kolbenbereichs M1 eine Längsnut 16 gebildet ist, die sich bezüglich des Schieberkolbens 10 entlang einer Axialrichtung A in der Mantelfläche des zylindrischen Kolbenbereichs M1 erstreckt und einen rechteckigen Querschnitt aufweist.

Der zylindrische Kolbenbereich M2 weist eine Mantelfläche auf, in der darstellungsgemäß zwei Ausnehmungen 18 gebildet sind und dadurch in der Mantelfläche ein Steg 19 festgelegt wird. Der Steg 19 verläuft in der Mantelfläche des zylindrischen Kolbenbereichs M2 entlang der Axialrichtung A und steht bezüglich der Ausnehmungen radial vom zylindrischen Kolbenbereich M2 ab. In den Ausnehmungen 18 Durchgangslöcher D sind bezüglich des Stegs 19 spiegelsymmetrisch angeordnet. Die Durchgangslöcher D verbinden die Ausnehmungen 18 mit dazu gegenüberliegend ausgebildeten weiteren Ausnehmungen, die in der perspektivischen Ansicht von Fig. 1 nicht dargestellt sind. Die nicht dargestellten weiteren Ausnehmungen legen einen diametral zum Steg 19 angeordneten weiteren Steg (nicht dargestellt) fest.

Es wird angemerkt, dass aufgrund der symmetrischen Anordnung der Durchgangslöcher D bezüglich des Stegs 19 und der radialen Orientierung des Stegs 19 eine grundsätzliche Ausrichtung des Schieberkolbens 10 in einem Schieberventil erfolgen kann, sofern der Steg 19 oder sein nicht dargestelltes diametrales Gegenstück als Strömungsteiler für anströmende Hydraulikflüssigkeit dient, so dass eine jeder Ausnehmung 18 zugeführte Menge von Hydraulikflüssigkeit gleich groß ist.

Der Steg 19 und die Längsnut 16 sind zueinander derart orientiert, dass zwischen dem Steg 19 und der Längsnut 16 zugeordneten Radialrichtungen (senkrecht zur Axialrichtung A) ein Winkel von 90° gebildet wird. Dies stellt jedoch keine Beschränkung dar und es wird angemerkt, dass die Längsnut 16 bezüglich dem Steg 19 in einer beliebigen vorab festgelegten Orientierung in der Mantelfläche M1 gebildet sein kann.

In dem zylindrischen Kolbenbereich M2 sind an axialen Enden des Stegs 19 Ausnehmungen 122, 124 gebildet. Deren Funktion wird weiter unten im Hinblick auf verschiedene Stellungen des Schieberkolbens im Ventilgehäuse (nicht dargestellt) eines Schieberventils (nicht dargestellt) näher beschrieben.

Der Schieberkolben 10 weist ferner den zylindrischen Kolbenbereich M3 mit Mantelfläche, der im wesentlichen in Entsprechung zum zylindrischen Kolbenbereich mit Mantelfläche M1 ausgebildet sein kann und optional eine entsprechende Längsnut (nicht dargestellt) aufweist.

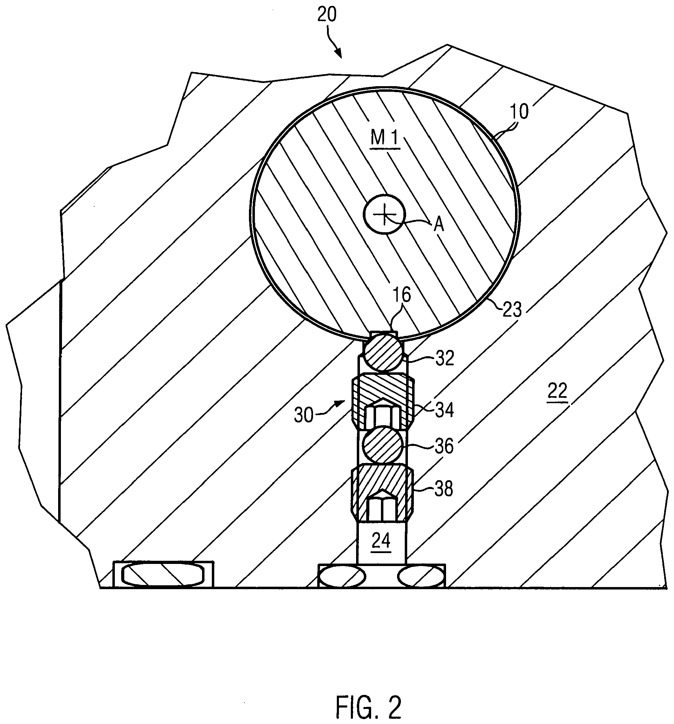

Mit Bezug auf Fig. 2 wird nachfolgend eine anschauliche Ausführungsform eines Schieberventils 20 mit Verdrehsicherung beschrieben. Fig. 2 zeigt in einer vergrößerten Schnittansicht einen Ausschnitt aus dem Schieberventil 20 mit einem Ventilgehäuse 22 und dem Schieberkolben 10, der mit Bezug auf Fig. 1 vorangehend beschrieben ist. Die Schnittansicht ist derart bezüglich der Axialrichtung A des Schieberkolbens 10 orientiert, dass die Axialrichtung A senkrecht zur dargestellten Schnittebene verläuft. Wie mit Bezug auf Fig. 1 oben erläutert wurde, ist die Längsnut 16 in der Mantelfläche des zylindrischen Kolbenbereichs M1 gebildet. Der Schieberkolben 10 ist in eine sich axial erstreckende Bohrung 23 des Ventilgehäuses 22 eingesetzt und axial, d.h. entlang der Axialrichtung A, verschiebbar.

Als nächstes wird die Verdrehsicherung 30 näher beschrieben. Im Ventilgehäuse 22 ist eine Bohrung 24 vorgesehen, die das Ventilgehäuse 22 bezüglich der Axialrichtung A radial durchsetzt. Eine Kugel 32 wirkt als Verdrehsicherungselement mit der Längsnut 16 und der Bohrung 24 derart zusammen, dass die Kugel 32 zumindest mit einer Kante der Längsnut 16 in Eingriff steht und/oder bei einer Verdrehung des Schieberkolbens entlang einer Drehrichtung zwischen der Bohrung 24 und der Längsnut 16 verkantet wird, dass die Verdrehung zuverlässig verhindert wird. Die Kugel 32 ist darstellungsgemäß durch einen Gewindestift 34 derart in der Bohrung positioniert, dass die Kugel 32 in der Bohrung und in der Längsnut 16 schwimmend angeordnet ist. Schwimmend bedeutet, dass die Kugel ein radiales Spiel hat und insbesondere nicht gleichzeitig mit mehr als einer Kante der Längsnut 16 und/oder dem Gewindestift 16 in Kontakt steht, wenn der Schieberkolben 10 derart im Ventilgehäuse 22 orientiert ist, dass die Längsnut 16 und die Bohrung 24 zueinander mittig ausgerichtet sind und keine Verdrehung des Schieberkolbens 10 varliegt. Durch eine gewünschte Einstellung des radialen Spiels der Kugel 32 in der Bohrung 24 bezüglich der Längsnut 16 wird mit dem Gewindestift 34 eine Toleranz der Verdrehsicherung 30 eingestellt und/oder feinjustiert. Hierzu wird angemerkt, dass ein radiales Spiel der Kugel 32 zweckmäßigerweise derart zu begrenzen ist, dass das radiale Spiel der Kugel 32 in der Bohrung 24 weniger als einem Durchmesser der Kugel 32 entspricht. Dadurch wird sichergestellt, dass durch ein Zusammenwirken der teilweise in die Bohrung 24 aufgenommenen Kugel 32 zumindest mit einer Kante der Längsnut 16 möglich ist und zwischen der Kugel 32 und mindestens einer Kante der Längsnut 16 und/oder dem Gewindestift 34 eine Punktberührung besteht. Alternativ kann hierzu die Bohrung 24 als Sackloch mit einer Tiefe von weniger als einem Durchmesser der Kugel 32 in der Mantelfläche der Bohrung 23 ausgebildet sein.

Zur Fixierung des Gewindestifts 34 an einer gewünschten Position in der Bohrung 24 und folglich zur Aufrechterhaltung eines gewünschten radialen Spiels der Kugel 32 in der Bohrung 24 mittels des Gewindestifts 34 wird dieser vorteilhafterweise in der Bohrung fixiert. Gemäß einigen beispielhaften Ausführungsformen erfolgt die Fixierung durch ein Konterelement durch das der Gewindestift 34 gekontert wird. In einigen anschaulichen Beispielen wird das Konterelement durch einen zweiten Gewindestift 38 bereitgestellt, der in der Bohrung 24 unterhalb des Gewindestifts 34 angeordnet ist. Gemäß dem in Fig. 2 dargestellten speziellen Beispiel ist ferner zwischen dem Gewindestift 34 und dem konternden Gewindestift 38 eine Kugel 36 angeordnet, so dass der Gewindestift 34 durch den Gewindestift 38 und die Kugel 36 gekontert wird. Die Verwendung der Kugel 36 zwischen den Gewindestiften 34 und 38 weist den Vorteil auf, dass sichergestellt ist, dass auf den Gewindestift 34 kein Drehmoment übertragen wird. Eine Feinjustierung des radialen Spiels der Kugel 32 kann nun durch ein Kontern des Gewindestifts 38 erfolgen, wobei, wie vorangehend erläutert, kein Drehmoment, jedoch eine Kraft von der Kugel 36 auf den Gewindestift 34 übertragen wird, die das radiale Spiel der Kugel 32 in der Bohrung, zwar stark begrenzt, verringert. Auf diese Weise kann eine Feinjustierung der Toleranz der Verdrehsicherung um beispielsweise plus/minus 1°, vorzugsweise plus/minus 0,5° oder weniger erfolgen.

Es wird angemerkt, dass eine Verdrehsicherung, die gemäß einiger anschaulicher Ausführungsformen aus einer in der Mantelfläche des Schieberkolbens axial verlaufenden Längsnut und mit der Längsnut zusammenwirkenden Kugel gebildet wird, die teilweise in eine Ausnehmung im Gehäuse 22 aufgenommen ist, den Vorteil aufweist, dass aufgrund der schwimmend angeordneten Kugel 32 das Verdrehsicherungselement freibeweglich ist und bei Aktivierung der Verdrehsicherung eine axiale Rollbewegung zumindest über den Schieberkolbenhub erfolgt. Eine weitere Verringerung der Reibung bei der Verdrehsicherung ergibt sich daher, dass mit der Verwendung einer Kugel als Verdrehsicherungselement lediglich eine punktuelle Berührung zwischen Kugel und Längsnut vorliegt, so dass der Reibwiderstand gegenüber herkömmlichen Lösungen weiter verringert ist. Es ergibt sich ferner aufgrund der Punktauflage der Verdrehsicherung bereitgestellt durch die Nut 16, die Bohrung 24 und die Kugel 32 eine lediglich geringe Abhängigkeit von der Form- und Lagetoleranz des Schieberkolbens 10 und der Schieberbohrung 24, so dass eine wirksame Verdrehsicherung bei geringer Toleranz ermöglicht wird. Außerdem werden unter Verwendung von Normteilen für die Verdrehsicherung, beispielsweise unter Verwendung von Normgewindestiften und/oder Normkugeln, kostengünstige Komponenten für die Verdrehsicherung bereitgestellt, so dass ein für die Massenfertigung günstiges Produkt realisiert werden kann. Des Weiteren ist die erfindungsgemäße Verdrehsicherung bei Proportionalventilen oder S/W-Ventilen mit oder ohne Magnet anwendbar. Dies erlaubt eine leichte Anwendung in einem großen Anwendungsgebiet.

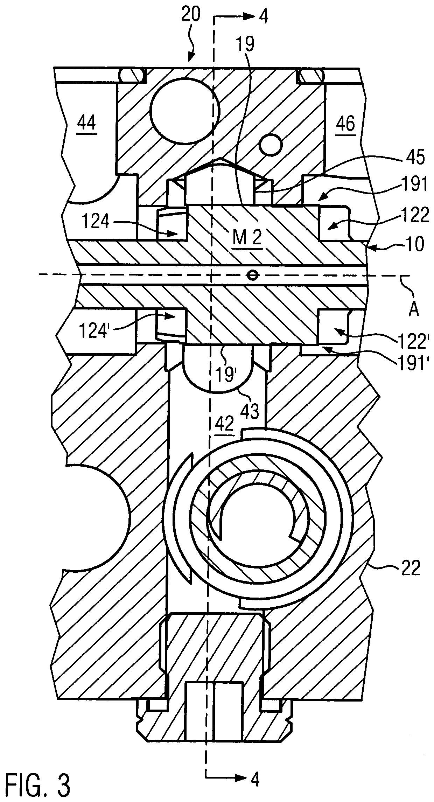

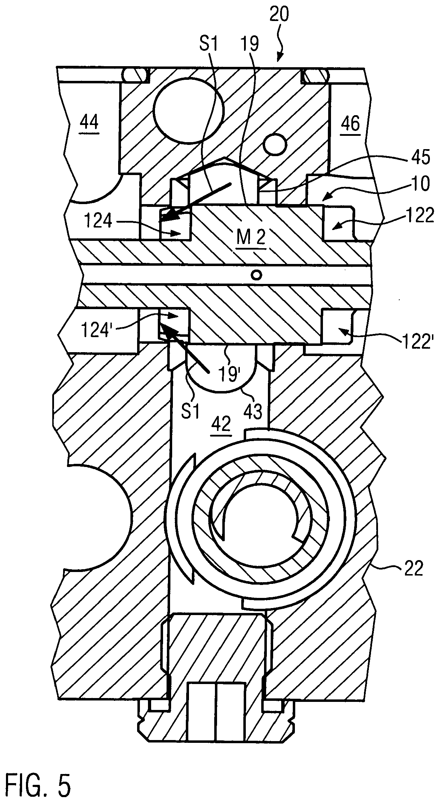

Figur 3 zeigt schematisch einen vergrößerten Ausschnitt im Schieberventil 20 gemäß einer Schnittansicht entlang der Axialrichtung A. Es ist vergrößert ein Abschnitt des Schieberkolbens 10 dargestellt, der innerhalb eines Ventilgehäuses 22 angeordnet ist. Der Schieberkolben 10 ist mit einer Druckeinlassmündung 42 verbunden, die wiederum mit einer Zuflussseite des Schieberventils 20, beispielsweise einer Pumpe, kommuniziert. Weiterhin ist der Schieberkolben 10 mit mindestens einem abflussseitigen Kanal als Zufluss zu einem Verbraucher verbunden. Beispielsweise sind zwei abflussseitige Kanäle 44 und 46 derart bezüglich dem Schieberkolben 10 im Ventilgehäuse 22 ausgebildet, dass je nach Stellung des Schieberkolbens 10 wechselweise nur einer der Kanäle 44, 46 geöffnet ist, dass heißt mit der Druckeinlassmündung 42 in Verbindung gebracht ist, während eine Verbindung der Druckeinlassmündung 42 mit dem anderen Kanal durch den Schieberkolben 10 gesperrt ist. In der in Figur 3 dargestellten Stellung des Schieberkolbens 10 ist beispielsweise eine Verbindung zwischen der Druckeinlassmündung 42 und dem Kanal 44 geöffnet, während ein Durchtritt von Hydraulikflüssigkeit aus der Druckeinlassmündung 42 in den Kanal 46 gesperrt ist. Hierbei ist in der dargestellten Stellung des Schieberkolbens 10 mittels der Aussparungen 124 und 124' im zylindrischen Kolbenbereich M2 eine Durchtrittsöffnung zwischen der Druckeinlassmündung 42 und dem Kanal 44 geöffnet. Demgegenüber sind entsprechende Aussparungen 122, 122' in der dargestellten Stellung des Schieberkolbens 10 von der Druckeinlassmündung 42 getrennt. Dadurch wird ein Durchfluss von Hydraulikflüssigkeit aus der Druckeinlassmündung 42 in den Kanal 46 unterbunden. Für die in Figur 3 dargestellte Stellung des Schieberkolbens 10 im Ventilgehäuse 22 ist in Figur 5 mittels Pfeile S1 schematisch ein Strömungspfad von Hydraulikflüssigkeit aus der Druckeinlassmündung 42 durch die Aussparungen 124, 124' zum Kanal 44 hin dargestellt.

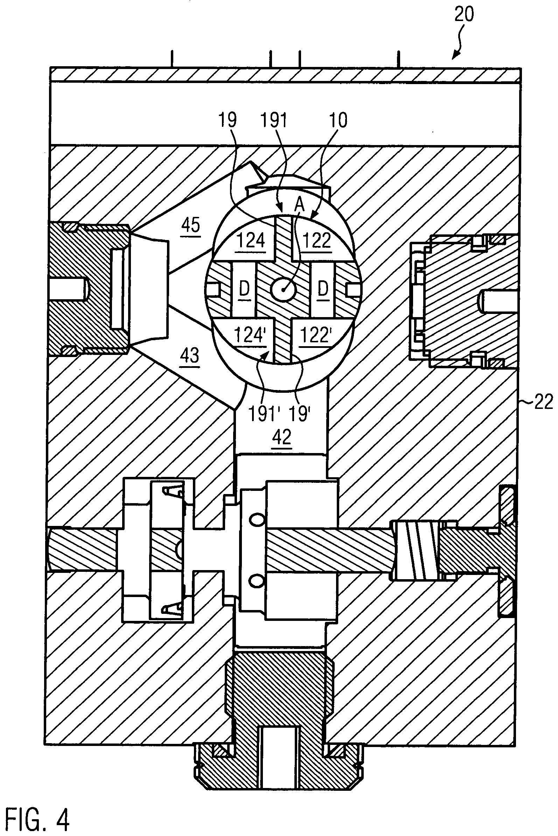

In Figur 4 ist eine Schnittansicht des Schieberventils 20 senkrecht zu der in Figur 3 dargestellten Schnittansicht gezeigt, wobei der in Figur 4 dargestellte Schnitt als senkrecht zur Zeichenebene in Figur 3 und entlang der Linie 4-4 in Figur 3 verlaufend zu verstehen ist. Die in Figur 4 dargestellte Schnittebene im Schieberventil 20 ist demzufolge senkrecht zur Axialrichtung A orientiert. In dieser Ansicht sind im Ventilgehäuse 22 ausgebildete Überströmkanäle 43, 45 sichtbar, die eine Verbindung einer unterseitigen Kolbenhälfte 191' mit der oberseitigen Kolbenhälfte 191 durch das Gehäuse ermöglicht. Damit steht die oberseitige Kolbenhälfte 191 zusätzlich zu den Durchtrittsöffnungen D mit der unterseitigen Kolbenhälfte 191' über die Übertrittskanäle 43 und 45 in Verbindung.

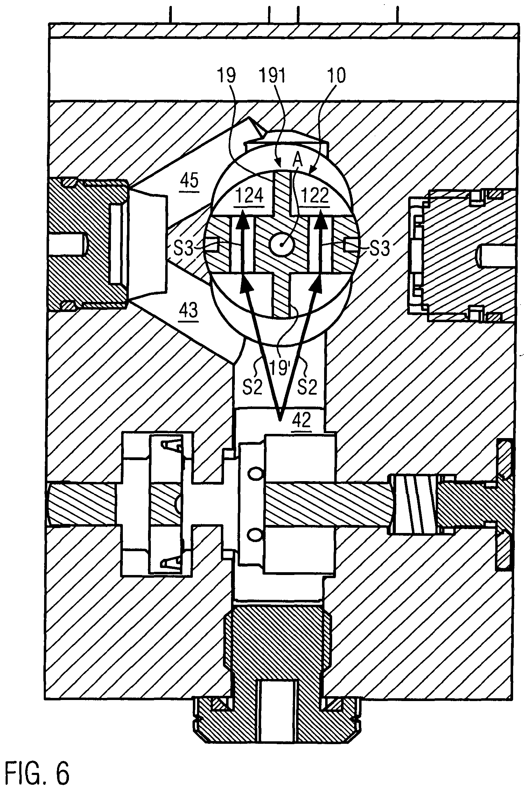

Bei vorgegebener Menge von Hydraulikflüssigkeit, die von der Druckeinlassmündung 42 über ein festes Zeitintervall bereitgestellt wird, fließt ein geringer Anteil, abhängig von der Größe der Durchtrittsöffnungen D, entlang eines Strompfads, der in Figur 6 mittels Pfeile S2, S3 schematisch dargestellt ist, von der unterseitigen Kolbenhälfte 191' durch den Schieberkolben und insbesondere die Durchtrittsöffnungen D zu der oberseitigen Kolbenhälfte 191. In einigen beispielhaften Ausführungsformen ist die durch die Durchtrittsöffnungen D fließende Menge pro festem Zeitintervall (bspw. 1 s, 5 s, 10 s, 1 min usw.) weniger oder gleich 5% der von der Druckeinlassmündung bereitgestellten Gesamtmenge pro festem Zeitintervall, wie etwa 1 % oder weniger. Mittels der Übertrittskanäle 43, 45, die unabhängig von der Stellung des Schieberkolbens im Ventilgehäuse die oberseitige Kolbenhälfte 191 mit der unterseitigen Kolbenhälfte 191' zusätzlich zu den Durchtrittsöffnungen D verbindet, wird im Effekt die maximale Fläche zwischen den Schieberhälften 191, 191' frei gegeben und in vorteilhafter Weise der Druckunterschied zwischen der oberseitigen Kolbenhälfte 191 und der unterseitigen Kolbenhälfte 191' verringert und möglichst gering gehalten. So kann z. B. erreicht werden, dass bei geöffnetem Schieberventil 20 über einen der Kanäle 44, 46 (vgl. Figur 5) abfließende Hydraulikflüssigkeit zu 51% durch die entsprechenden unterseitigen Aussparungen 124' bzw. 122' abfließt, während 49% mittels der entsprechenden oberseitigen Aussparung 122 bzw. 124 zum entsprechenden Kanal 44, 46 hin abfließen kann. Bei dem vorherrschenden geringen Druckabfall zwischen der oberseitigen Kolbenhälfte 191 und der unterseitigen Kolbenhälfte 191' werden die Durchtrittsöffnungen D (vgl. Figur 4) durchströmt, wie anhand der Pfeile S3 in Figur 6 schematisch dargestellt ist. Hierbei erfolgt nun eine Ausrichtung bzw. Stabilisierung des Schieberkolbens 10 im Ventilgehäuse 22, wie nachfolgend erläutert wird.

Der Steg 19', der durch die Aussparungen 18' an der unterseitigen Kolbenhälfte 191' gebildet ist, teilt den von der Druckeinlassmündung 42 zugeführten Strom an Hydraulikflüssigkeit, d. h. der Steg 19' agiert als Strömungsteiler für die von der Druckeinlassmündung 42 bereitgestellte Hydraulikflüssigkeit, die die unterseitige Kolbenhälfte 191' anströmt. Bei der darstellungsgemäßen radialen Orientierung des Stegs 19' bzgl. der axialen Richtung A und einer hinsichtlich des Stegs 19' spiegelsymmetrischen Ausrichtung der Durchtrittsöffnungen D erfolgt eine Ausrichtung des Schieberkolbens 10 im Ventilgehäuse, die aufgrund der symmetrischen Konfiguration von Steg 19' und Durchtrittsöffnungen D sehr stabil ist. Dies bedeutet, dass ein durch die anströmende Hydraulikflüssigkeit auf den Schieberkolben aufgebrachtes Drehmoment reduziert, wenn nicht sogar unterdrückt wird. Der Schieberkolben 10 wird demzufolge gegenüber Eigenrotation und Verdrehung stabilisiert und es treten insgesamt an der Verdrehsicherung geringere Kräfte auf, was den Reibaufwand an der Verdrehsicherung in vorteilhafter Weise weiter verringert.

In einigen anschaulichen Ausführungsformen ist der Querschnitt eines Kanals 43 oder 45 größer ist als der Querschnitt der Durchgangslöcher D. Unter dem Querschnitt eines Kanals/Durchgangslochs wird die Fläche des Kanals/Durchgangslochs verstanden, die an einem Zeitpunkt von einer Flüssigkeit durchströmt wird. Beispielsweise kann ein kleinster Querschnitt der Kanäle 43, 45 größer sein als ein größter Querschnitt der Durchgangslöcher D. In einem anschaulichen Beispiel ist die Summe des kleinsten Querschnitts für jeden Kanal 43, 45 größer als die Summe des maximalen Querschnitts für jedes Durchgangsloch D. Zusätzlich oder alternativ kann die Summe des kleinsten Querschnitts eines Kanals 43, 45 größer sein die Summe des maximalen Querschnitts eines Durchgangsloch D, wobei dies für jeden Kanal und für jedes Durchgangsloch separat zu erfüllen ist.

Insgesamt wird ein Schieberventil mit Verdrehsicherung bereitgestellt, die zum Einen mittels des als Kugel ausgebildeten Verdrehsicherungselements eine sehr geringe Reibung bereitstellt, die ferner durch Stabilisierung und Verringerung von Eigenrotation und Verdrehung des Schieberkolbens durch den hinsichtlich des oben dargestellten Ausrichtmechanismus weiter verringert wird, da mittels des anströmseitig am Schieberkolben ausgebildeten Stegs als Stromteiler eine Stabilität des Schieberkolbens 10 gegenüber Verdrehung begünstigt wird.

Obwohl vorangehend anschauliche Ausführungsformen beschrieben sind, in denen eine Verdrehsicherung in einem Schieberventil mittels einer Kugel als Verdrehsicherungselement bereitgestellt wird, die mit einer in einem Schieberkolben zumindest über den Hubweg verlaufenden Längsnut und einer Bohrung in einem Ventilgehäuse des Schieberventils zusammenwirkt, stellt dies keine Beschränkung der vorliegenden Offenbarung dar. Es sind auch Verdrehsicherungen denkbar, in denen eine Radialbohrung im Schieberkolben gebildet ist, mit der die Kugel im Zusammenwirken mit einer im Ventilgehäuse, genauer in der Mantelfläche einer den Schieberkolbenaufnehmenden Bohrung gebildeten Längsnut die Verdrehsicherung bereitstellt.

Es wird also eine einfache, platzsparende und reibungsarme Sicherung gegen Eigenrotation eines Schiebers in einem Schieberventil bereitgestellt, da die Verdrehsicherung nur bei Verdrehung des Schiebers aktiviert wird und aufgrund des als freibewegliche bzw. schwimmende Kugel ausgeführten Verdrehsicherungselements insbesondere bei Axialbewegung des Schiebers durch das Abrollen der Kugel auf Kanten der Längsnut sehr geringe Reibungskräfte auftreten. Trotzdem ist die Toleranz der Verdrehsicherung auf sehr geringe Winkelabweichungen einstellbar, beispielsweise ist eine Verdrehsicherung bei einer Toleranz von +/- 3° oder weniger, etwa +/- 1 möglich, ohne dass erhöhte Reibungsverluste auftreten. Unter Verwendung von Normteilen für die Verdrehsicherung, beispielsweise Normkugeln bzw. Normgewindestiften werden kostengünstige Komponenten für die Verdrehsicherung bereitgestellt, die hohe Oberflächen- und Maßgüten aufweisen.

## Patentansprüche

1. Schieberventil (20) mit Verdrehsicherung (30), wobei das Schieberventil (20) ein Ventilgehäuse (22) und einen Schieberkolben (10) umfasst, der im Ventilgehäuse (22) axial verschiebbar angeordnet ist und einen zylindrischen Kolbenbereich (M1) mit Mantelfläche aufweist, in der eine axial zumindest über den Schieberkolbenhub verlaufende Längsnut (16) gebildet ist, in die ein im Ventilgehäuse (22) angeordnetes Verdrehsicherungselement (32) eingreift, **dadurch gekennzeichnet, dass** das Verdrehsicherungselement (32) eine zumindest mit Kanten der Längsnut (16) zusammenwirkende Kugel (32) ist, die im Ventilgehäuse (22) schwimmend angeordnet ist.

2. Schieberventil (20) nach Anspruch 1, wobei zwischen der Kugel (32) und mindestens einer Kante der Längsnut (16) nur eine Punktberührung besteht.

3. Schieberventil (20) nach Anspruch 1 oder 2, wobei in Ausrichtung zur Längsnut (16) im Ventilgehäuse (22) eine radiale Bohrung (24) mit einem darin angeordneten Gewindestift (34) vorgesehen ist, so dass ein radiales Spiel der Kugel (32) aus der Längsnut (16) heraus durch den Gewindestift (34) begrenzt wird.

4. Schieberventil (20) nach Anspruch 3, wobei in der Bohrung (24) ferner ein den Gewindestift (34) konterndes Konterelement (38) vorgesehen ist.

5. Schieberventil (20) nach Anspruch 4, wobei ferner zwischen dem Gewindestift (34) und dem Konterelement (38) in der Bohrung (24) eine weitere Kugel (36) angeordnet ist.

6. Schieberventil (20) nach Anspruch 4 oder 5, wobei das Konterelement (38) durch einen zweiten Gewindestift bereitgestellt wird.

7. Schieberventil (20) nach einem der Ansprüche 1 bis 6, wobei in der Mantelfläche des Schieberkolbens (10) ferner zwei Ausnehmungen (18') gebildet sind, die einen Steg (19') als Strömungsteiler für Hydraulikflüssigkeit in Ausrichtung zu einer im Ventilgehäuse (22) vorgesehenen Druckeinlassmündung (42) festlegen.

8. Schieberventil (20) nach Anspruch 7, wobei ferner dem Steg (19') in der Mantelfläche diametral gegenüberliegend ein weiterer Steg (19) durch zwei weitere Ausnehmungen (18) festgelegt wird und in den Ausnehmungen (18, 18') bezüglich der Stege (19, 19') spiegelsymmetrisch angeordnete Durchgangslöcher (D) gebildet sind, so dass die gegenüberliegenden Ausnehmungen (18, 18') beider Kolbenhälften (191, 191') jeweils miteinander durch die Durchgangslöcher (D) in Verbindung stehen.

9. Schieberventil (20) nach Anspruch 8, wobei die Stege (19, 19') aufweisenden Kolbenhälften (191, 191') des Schieberkolbens (10) zusätzlich durch im Ventilgehäuse (22) gebildete Kanäle (43, 45) verbunden sind.

10. Schieberventil (20) nach Anspruch 9, wobei der Querschnitt eines Kanals (43, 45) größer ist als der Querschnitt der Durchgangslöcher (D).

11. Schieberventil (20) nach einem der Ansprüche 1 bis 10, wobei eine Tiefe und/oder Weite der Längsnut (16) in der Mantelfläche des Schieberkolbens (10) kleiner ist als der Durchmesser der Kugel (32).

12. Schieberventil (20) nach einem der Ansprüche 1 bis 11, wobei die Längsnut (16) senkrecht zu ihrer axialen Erstreckungsrichtung einen rechteckigen Querschnitt aufweist.

## Claims

1. Sliding valve (20) having anti-twist protection (30), the sliding valve (20) comprising a valve housing (22) and a sliding piston (10) that is arranged so as to be axially movable in the valve housing (22) and that comprises a cylindrical piston region (M1) having a lateral surface in which a longitudinal groove (16) is formed which extends axially at least over the sliding-piston stroke and in which an anti-twist protection element (32) arranged in the valve housing (22) engages, **characterised in that** the anti-twist protection element (32) is a ball (32) that interacts at least with edges of the longitudinal groove (16) and is arranged in the valve housing (22) in a floating manner.

2. Sliding valve (20) according to claim 1, wherein there is just one point contact between the ball (32) and at least one edge of the longitudinal groove (16).

3. Sliding valve (20) according to either claim 1 or claim 2, wherein a radial hole (24) having a threaded pin (34) arranged therein is provided in alignment with the longitudinal groove (16) in the valve housing (22), and therefore radial play of the ball (32) out of the longitudinal groove (16) is limited by the threaded pin (34).

4. Sliding valve (20) according to claim 3, wherein a locking element (38) that locks the threaded pin (34) is further provided in the hole (24).

5. Sliding valve (20) according to claim 4, wherein another ball (36) is further arranged in the hole (24) between the threaded pin (34) and the locking element (38).

6. Sliding valve (20) according to either claim 4 or claim 5, wherein the locking element (38) is provided by a second threaded pin.

7. Sliding valve (20) according to any of claims 1 to 6, wherein two recesses (18') are further formed in the lateral surface of the sliding piston (10) and define a rib (19') in the form of a flow divider for hydraulic fluid in alignment with a pressure inlet opening (42) provided in the valve housing (22).

8. Sliding valve (20) according to claim 7, wherein another rib (19) is defined by two additional recesses (18) so as to be diametrically opposite the rib (19') in the lateral surface, and through-holes (D) arranged in mirror symmetry with the ribs (19, 19') are formed in the recesses (18, 18') such that the opposing recesses (18, 18') in the two piston halves (191, 191') are each interconnected by the through-holes (D).

9. Sliding valve (20) according to claim 8, wherein the piston halves (191, 191') of the sliding piston (10) comprising ribs (19, 19') are additionally connected by channels (43, 45) formed in the valve housing (22).

10. Sliding valve (20) according to claim 9, wherein the cross section of a channel (43, 45) is greater than the cross section of the through-holes (D).

11. Sliding valve (20) according to any of claims 1 to 10, wherein a depth and/or a width of the longitudinal groove (16) in the lateral surface of the sliding piston (10) is less than the diameter of the ball (32).

12. Sliding valve (20) according to any of claims 1 to 11, wherein the longitudinal groove (16) has a rectangular cross section perpendicularly to its axial direction of extension.

## Revendications

1. Soupape à tiroir (20) comprenant une protection anti-rotation (30), dans laquelle la soupape à tiroir (20) comporte un carter de soupape (22) et un piston-tiroir (10), qui est monté axialement mobile dans le carter de soupape (22) et présente une zone de piston cylindrique (M1) pourvue d'une surface extérieure, dans laquelle est formée une rainure longitudinale (16) s'étendant axialement au moins sur toute l'étendue de la course du piston-tiroir, rainure dans laquelle s'insère un élément de protection anti-rotation (32) agencé dans le carter de soupape (22), **caractérisée en ce que** l'élément de protection anti-rotation (32) est une sphère (32) qui coopère au moins avec les bords de la rainure longitudinale (16) et qui est agencée de manière flottante dans le carter de soupape (22).

2. Soupape à tiroir (20) selon la revendication 1, dans laquelle un seul contact ponctuel est présent entre la sphère (32) et au moins un bord de l'arête longitudinale (16).

3. Soupape à tiroir (20) selon la revendication 1 ou 2, dans laquelle un trou radial (24) dans lequel est agencée une tige filetée (34) est ménagé en alignement avec la rainure longitudinale (16) dans le carter de soupape (22), de sorte qu'un jeu radial de la sphère (32) à l'extérieur de la rainure longitudinale (16) est limité par la tige filetée (34).

4. Soupape à tiroir (20) selon la revendication 3, dans laquelle un élément antagoniste (38) bloquant par contre-écrou la tige filetée (34) est prévu en outre dans le trou (24).

5. Soupape à tiroir (20) selon la revendication 4, dans laquelle une autre sphère (36) est agencée en outre dans le trou (24) entre la tige filetée (34) et l'élément antagoniste (38).

6. Soupape à tiroir (20) selon la revendication 4 ou 5, dans laquelle l'élément antagoniste (38) est mis à disposition par une deuxième tige filetée.

7. Soupape à tiroir (20) selon l'une quelconque des revendications 1 à 6, dans laquelle deux évidements (18'), qui fixent un élément de liaison (19') utilisé comme diviseur d'écoulement pour un liquide hydraulique en alignement avec une embouchure d'admission sous pression (42) ménagée dans le carter de soupape (22), sont formés en outre dans la surface extérieure du piston-tiroir (10).

8. Soupape à tiroir (20) selon la revendication 7, dans laquelle un autre élément de liaison (19) est fixé en outre par deux autres évidements (18) de manière diamétralement opposée à l'élément de liaison (19') dans la surface extérieure et des trous de passage (D) ménagés en symétrie spéculaire par rapport aux éléments de liaison (19, 19') sont formés dans les évidements (18, 18'), de sorte que les évidements (18, 18') opposés des deux moitiés de piston (191, 191') sont respectivement en liaison les uns avec les autres au moyen des trous de passage (D).

9. Soupape à tiroir (20) selon la revendication 8, dans laquelle les moitiés de piston (191, 191'), comprenant les éléments de liaison (19, 19'), du piston-tiroir (10) sont reliées en plus par des canaux (43, 45) formés dans le carter de soupape (22).

10. Soupape à tiroir (20) selon la revendication 9, dans laquelle la section transversale d'un canal (43, 45) est plus grande que la section transversale des trous de passage (D).

11. Soupape à tiroir (20) selon l'une quelconque des revendications 1 à 10, dans laquelle une profondeur et/ou une largeur de la rainure longitudinale (16) dans la surface extérieure du piston-tiroir (10) est inférieure au diamètre de la sphère (32).

12. Soupape à tiroir (20) selon l'une quelconque des revendications 1 à 11, dans laquelle la rainure longitudinale (16) présente perpendiculairement à sa direction d'étendue axiale une section transversale rectangulaire.
